# EUROPÄISCHE PATENTSCHRIFT

(11) **EP 1 451 464 B1**
(45) Veröffentlichungstag und Bekanntmachung des Hinweises auf die Patenterteilung: **26.10.2005**
(21) Anmeldenummer: 02787400.7
(22) Anmeldetag: 26.11.2002
(51) Int. Cl.: F02M 35/024, F01N 3/30

(54) **ANSAUGLUFTFILTER FÜR EINE BRENNKRAFTMASCHINE**
INTAKE AIR FILTER FOR AN INTERNAL COMBUSTION ENGINE
FILTRE A AIR D'ADMISSION POUR UN MOTEUR A COMBUSTION INTERNE

(30) Priorität: 01.12.2001 DE 10159097
(43) Veröffentlichungstag der Anmeldung: 01.09.2004
(73) Patentinhaber: MAHLE Filtersysteme GmbH, 70376 Stuttgart (DE)
(72) Erfinder: PRELLWITZ, Christian, 73547 Lorch (DE); STEHLIG, Jürgen, 72666 Neckartailfingen (DE)
(74) Vertreter: Bernhard, Uwe
(86) Internationale Anmeldenummer: PCT/DE2002/004336
(87) Internationale Veröffentlichungsnummer: WO 2003/048557

(56) Entgegenhaltungen:
- GB-A- 1 220 174
- US-A- 3 906 724
- US-A- 4 179 883
- US-B1- 6 306 190
- PATENT ABSTRACTS OF JAPAN vol. 004, no. 088 (M-017), 24. Juni 1980 (1980-06-24) & JP 55 046009 A (YAMAHA MOTOR CO LTD), 31. März 1980 (1980-03-31)

## Beschreibung

Die vorliegende Erfindung betrifft ein Ansaugluftfilter für eine Brennkraftmaschine, insbesondere bei einem Kraftfahrzeug, mit den Merkmalen des Oberbegriffs des Anspruchs 1.

Ein derartiges Ansaugluftfilter ist beispielsweise aus der DE 39 34 433 C2 bekannt und besitzt ein Filtergehäuse, das einen Rohlufteinlass und einen Reinluftauslass aufweist. In diesem Filtergehäuse enthält das Ansaugluftfilter einen Ringfiltereinsatz, der im Betrieb radial von außen nach innen durchströmt ist und der an einem axialen Ende eine erste Endscheibe aufweist. Diese erste Endscheibe ist als offene Endscheibe ausgebildet und weist somit eine zentrale Öffnung auf, durch die ein am Reinluftauslass des Filtergehäuses ausgebildeter Auslassstutzen die erste Endscheibe durchsetzt, so dass der Reinluftauslass durch die Öffnung der ersten Endscheibe mit einem reinseitigen Inneren des Ringfiltereinsatzes kommuniziert. Eine an einem von der ersten Endscheibe abgewandten axialen Ende ausgebildete zweite Endscheibe des Ringfiltereinsatzes ist als geschlossene Endscheibe ausgebildet.

Ein derartiges Ansaugluftfilter dient zur Versorgung einer Brennkraftmaschine mit gereinigter Frischluft und bildet einen Bestandteil eines Ansaugtraktes der Brennkraftmaschine. Bei bestimmten Brennkraftmaschinen kann mit Hilfe einer Sekundärluftversorgung Luft z.B. in den Abgasstrang der Brennkraftmaschine eingeblasen werden, beispielsweise um im Abgasstrang zur Reduzierung von Schadstoffemisionen eine Nachoxidation der Verbrennungsabgase durchzuführen. Hierzu wird üblicherweise gereinigte Frischluft verwendet, die stromab des Ansaugluftfilters aus dem Ansaugtrakt der Brennkraftmaschine abgezweigt wird. Ebenso kann mit Hilfe einer Sekundärluftversorgung gereinigte Frischluft auch für andere Zwecke, z.B. für die Regeneration eines Partikelfilters, benötigt werden. Da der Ansaugtrakt einer Brennkraftmaschine, insbesondere bei einem Kraftfahrzeug, regelmäßig auch zur Dämpfung des im Betrieb auftretenden Schalls ausgelegt ist, kann eine zusätzliche, an den Frischlufttrakt angeschlossene Abzweigungsleitung die geräuschoptimierte Abstimmung der Sauganlage beeinträchtigen. Desweiteren bewirkt die Aktivierung eines Sekundärluftgebläses einen Druckabfall im Frischlufttrakt, der sich nachteilig auf die Frischluftversorgung der Brennkraftmaschine auswirken kann.

Aus US-3906724 sind ein Ansaugfilter und Ringfiltereinsatz bekannt, wobei durch die Öffnung einer Endscheibe der Sekundärfuftauslass mit dem Inneren des Ringfiltereinsatzes kommuniziert.

Die vorliegende Erfindung beschäftigt sich mit dem Problem, für eine Brennkraftmaschine mit Sekundärluftversorgung einen Weg aufzuzeigen, der den Einfluss der Sekundärluftabzweigung auf die Abstimmung der Frischluftanlage reduziert.

Dieses Problem wird durch die Gegenstände der unabhängigen Ansprüche gelöst. Vorteilhafte Ausführungsformen sind Gegenstand der abhängigen Ansprüche.

Die Erfindung beruht auf dem allgemeinen Gedanken, die Sekundärluft bereits am Filtergehäuse abzuzweigen, indem dort ein Sekundärluftauslass angebracht wird, der im Inneren des Filtergehäuses durch eine der ersten Endscheibe gegenüberliegende zweite Endscheibe des Ringfiltereinsatzes mit dem Inneren des Ringfiltereinsatzes kommuniziert. An der zweiten Endscheibe ist ein Anschlussstutzen ausgebildet, durch den der Sekundärluftauslass des Filtergehäuses mit dem Inneren des Ringfiltereinsatzes kommuniziert. Durch diese Bauweise wird die Sekundärluft zwar auf der Reinseite des Ringfiltereinsatzes abgenommen, jedoch erfolgt die zusätzliche Luftentnahme nicht stromab des Filtergehäuses, sondern bereits im Filtergehäuse. Ein sich bei der Aktivierung der Sekundärluftansaugung gegebenenfalls einstellender Druckabfall kann sich dann nicht oder nicht mehr so deutlich auf den stromab des Filtergehäuses liegenden Ansaugtrakt der Brennkraftmaschine auswirken, denn zum einen ist der Strömungsweg bis zum Rohlufteinlass des Filtergehäuse bei der erfindungsgemäßen Bauweise relativ kurz und zum andern kann der Rohlufteinlass des Filtergehäuses entsprechend groß dimensioniert sein, so dass an dieser Stelle keine einen Druckabfall begünstigende Drosselung entsteht. Darüber hinaus ermöglicht die erfindungsgemäße Bauweise des Ansaugluftfilters eine neuartige Leitungsführung für die Saugleitung der Sekundärluftversorgung, die für bestimmte Anwendungsfälle vorteilhaft sein kann.

Durch diese Bauweise kann der Einbau des mit dem Anschlussstutzen ausgestatteten Ringfiltereinsatzes in das Filtergehäuse erheblich vereinfacht werden. Gleichzeitig kann dadurch das Filtergehäuse konstruktiv einfach ausgestaltet werden.

Grundsätzlich ist es möglich, den Anschlussstutzen und die zweite Endscheibe als separate Bauteile herzustellen, wobei dann der Anschlussstutzen in die zweite Endscheibe eingesetzt und/oder mit dieser fest verbunden und/oder mit dieser verschweißt oder verklebt ist. Diese Bauweise ermöglicht eine funktionsoptimierte Materialauswahl für die unabhängig voneinander hergestellten Bauteile.

Alternativ kann der Anschlussstutzen separat von der zweiten Endscheibe hergestellt sein, wobei dann der Anschlussstutzen bei der Herstellung der zweiten Endscheibe durch Umspritzen oder Umschäumen fest in die zweite Endscheibe eingeformt oder eingeschäumt ist. Auch diese Bauweise ermöglicht eine unterschiedliche Materialauswahl für die beiden Bauteile, wobei der Anschlussstutzen bei der Herstellung der zweiten Endscheibe in diese integriert wird, um dadurch eine untrennbare Einheit auszubilden. Bei dieser Herstellungsart entfällt eine Montage des Anschlussstutzens an der Endscheibe, ebenso können Dichtungsmaßnahmen entfallen.

Bei einer besonders vorteilhaften alternativen Ausführungsform kann der Anschlussstutzen integral an die zweite Endscheibe angeformt sein. Das bedeutet, dass Anschlussstutzen und zweite Endscheibe einstückig, insbesondere in einem Spritzgussvorgang, hergestellt sind. Diese Bauweise ist besonders preiswert realisierbar und eignet sich vorteilhaft für eine Massenproduktion.

Entsprechend einer besonderen Weiterbildung kann am Filtergehäuse ein Sekundärauslassstutzen ausgebildet sein, der komplementär zum Anschlussstutzen der zweiten Endscheibe ausgebildet ist und durch den der Sekundärluftauslass mit dem Inneren des Ringfiltereinsatzes kommuniziert. Der Sekundärauslassstutzen bildet dabei im Inneren des Filtergehäuses eine Verlängerung des Sekundärluftauslasses. Mit Hilfe eines derartigen Sekundärauslassstutzens kann eine hinreichend abgedichtete kommunizierende Verbindung zwischen dem Sekundärluftauslass und dem Inneren des Ringfiltereinsatzes besonders einfach realisiert werden. Desweiteren kann durch eine geeignete Anordnung eines derartigen Sekundärauslassstutzens der Einbau des Ringfiltereinsatzes in das Filtergehäuse vereinfacht werden, was bei der Erstmontage als auch beim Austausch des Ringfiltereinsatzes von Vorteil ist.

Auch hier ist es zweckmäßig, den Sekundärauslassstutzen integral am Filtergehäuse auszuformen, so dass eine relativ preiswerte einstückige Herstellung, z.B. durch ein Spritzgussverfahren, ermöglicht wird.

Der Einbau des Ringfiltereinsatzes in das Filtergehäuse kann auch dadurch vereinfacht werden, dass der Sekundärauslassstutzen des Filtergehäuses und der Anschlussstutzen der zweiten Endscheibe nach Art einer Steckverbindung zusammenwirken, wenn der Ringfiltereinsatz in das Filtergehäuse eingesetzt wird.

Weitere wichtige Merkmale und Vorteile der Erfindung ergeben sich aus den Unteransprüchen, aus den Zeichnungen und aus der zugehörigen Figurenbeschreibung anhand der Zeichnungen.

Es versteht sich, dass die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Ein bevorzugtes Ausführungsbeispiel der Erfindung ist in den Zeichnungen dargestellt und wird in der nachfolgenden Beschreibung näher erläutert, wobei sich gleiche Bezugszeichen auf gleiche oder funktional gleiche oder ähnliche Bauteile beziehen.

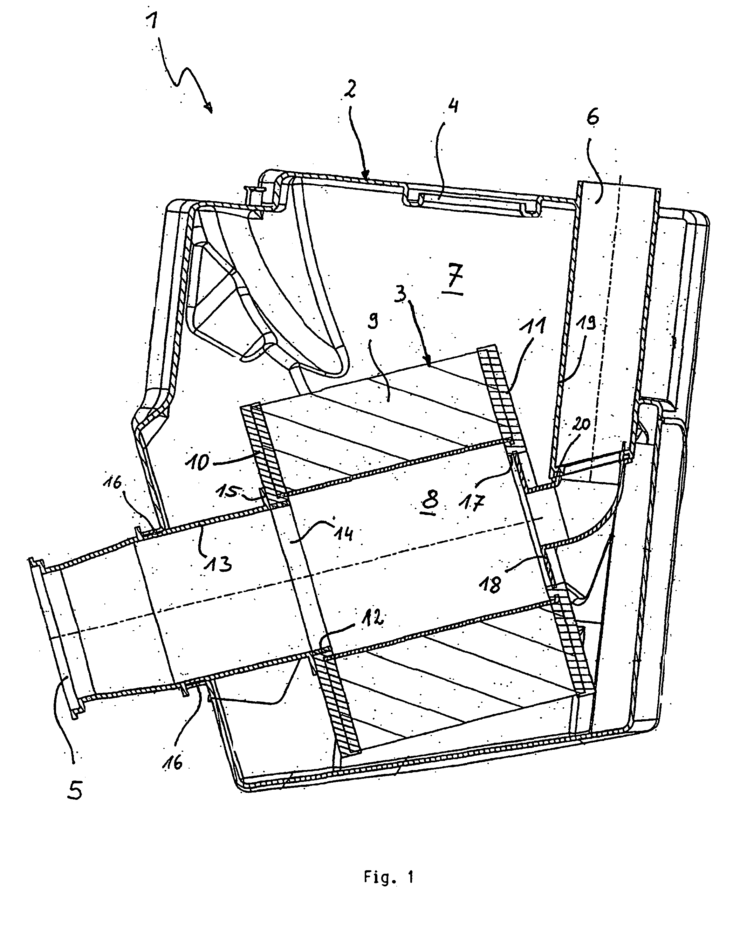

Die einzige Fig. 1 zeigt eine Schnittansicht durch ein erfindungsgemäßes Ansaugluftfilter.

Entsprechend Fig. 1 weist ein erfindungsgemäßes Ansaugluftfilter 1 ein Filtergehäuse 2 sowie einen darin untergebrachten Ringfiltereinsatz 3 auf. Das Ansaugluftfilter 1 bildet dabei einen Bestandteil eines im Übrigen nicht dargestellten Frischlufttrakts einer ebenfalls nicht dargestellten Brennkraftmaschine, insbesondere eines Kraftfahrzeugs. Das Filtergehäuse 2 weist einen Rohlufteinlass 4 auf, der üblicherweise mit einer Umgebung der Brennkraftmaschine kommuniziert. Desweiteren enthält das Filtergehäuse 2 einen Reinluftauslass 5, durch den die gefilterte Frischluft zu den Brennräumen der Brennkraftmaschine gelangt. Das erfindungsgemäße Filtergehäuse 2 ist außerdem mit einem Sekundärluftauslass 6 ausgestattet, der an eine ebenfalls nicht gezeigte Sekundärluftversorgung der Brennkraftmaschine anschließbar ist.

Der Ringfiltereinsatz 3 trennt im Inneren des Filtergehäuses 2 einen den Ringfiltereinsatz 3 umgebenden Rohraum 7 von einem Reinraum 8, der durch das Innere des Ringfiltereinsatzes 3 gebildet ist, so dass im Folgenden mit dem Bezugszeichen 8 auch das Innere des Ringfiltereinsatzes 3 bezeichnet wird. Bei dieser Bauweise wird ein ringförmiger Filterkörper 9 des Ringfiltereinsatzes 3 radial von außen nach innen durchströmt. Der Ringfiltereinsatz 3 weist an seinen axialen Enden jeweils eine Endscheibe, nämlich eine erste Endscheibe 10 und eine zweite Endscheibe 11, auf.

Die erste Endscheibe 10 ist dem Reinluftauslass 5 zugeordnet und enthält eine zentrale Öffnung 12, durch die der Reinluftauslass 5 mit dem Inneren 8 des Ringfiltereinsatzes 3 kommuniziert. Bei der hier gezeigten Ausführungsform ist am Filtergehäuse 2 im Bereich des Reinluftauslasses 5 ein Hauptauslassstutzen 13 ausgebildet, auf den der Ringfiltereinsatz 3 mit der Öffnung 12 der ersten Endscheibe 10 aufsteckbar ist. Dabei dringt ein axial vorstehender Ring 14 in die Öffnung 12 der ersten Endscheibe 10 ein. Bei vollständig aufgestecktem Ringfiltereinsatz 3 kommt die erste Endscheibe 10 in Einsteckrichtung an einem am Hauptauslassstutzen 13 ausgebildeten, in Umfangsrichtung geschlossen umlaufenden, radial abstehenden Kragen 15 zur Anlage. Entsprechende, hier nicht näher gezeigte Dichtmittel gewährleisten dabei eine hinreichende Abdichtung der Reinseite 8 gegenüber der Rohseite 7. Der Hauptauslassstutzen 13 kann separat vom Filtergehäuse 2 hergestellt sein und bei 16 damit verbunden sein, insbesondere durch eine Schweißverbindung oder Klebverbindung.

Ebenso wie die erste Endscheibe 10 ist auch die zweite Endscheibe 11 als offene Endscheibe ausgebildet und enthält eine zentrale Öffnung 17, durch die der Sekundärluftauslass 6 mit dem Inneren 8 des Ringfiltereinsatzes 3 kommuniziert. Im Bereich dieser zentralen Öffnung 17 ist in die zweite Endscheibe 11 ein Anschlussstutzen 18 eingesetzt. Beispielsweise kann dieser Anschlussstutzen 18 bei der Herstellung der zweiten Endscheibe 11 in entsprechender Weise mit dem Endscheibenwerkstoff umspritzt bzw. umschäumt bzw. einstückig ausgebildet werden, wodurch der Anschlussstutzen 18 einen unlösbaren Bestandteil der zweiten Endscheibe 11 bildet. Bei der hier gezeigten Ausführungsform ist der Anschlussstutzen 18 abgewinkelt bzw. gekrümmt und bei in das Filtergehäuse 2 eingesetztem Ringfiltereinsatz 3 mit einem Sekundärauslassstutzen 19 kommunizierend verbunden. Dieser Sekundärauslassstutzen 19 ist innen am Filtergehäuse 2 ausgebildet und mit dem Sekundärluftauslass 6 kommunizierend verbunden; bzw. bildet der Sekundärauslassstutzen 19 an seinem vom Anschlussstutzen 18 abgewandten Ende den Sekundärluftauslass 6. Zweckmäßig ist der Sekundärauslassstutzen 19 einteilig bzw. integral mit dem Filtergehäuse 2 hergestellt, z.B. durch ein Spritzgussverfahren.

Bei der hier gezeigten Ausführungsform kommen Anschlussstutzen 18 und Sekundärauslassstutzen 19 bei in das Filtergehäuse 2 eingesetztem Ringfiltereinsatz 3 in axialer Richtung aneinander zur Analge, wobei axial wirkende Dichtmittel 20 vorgesehen sind, um auch im Bereich der zweiten Endscheibe 11 den Reinraum 8 gegenüber dem Rohraum 7 abzudichten.

Bevorzugt wird eine Ausführungsform, bei der Anschlussstutzen 18 und Sekundärauslassstutzen 19 nach Art einer Steckverbindung zusammenwirken, wobei dann insbesondere eine radiale Dichtung vorgesehen sein kann.

Ebenso ist es möglich, einen der Stutzen 18 oder 19 kegelförmig auszubilden, wobei dann der andere Stutzen eine komplementäre Aufnahme enthält. Auch diese Bauweise vereinfacht die Herstellung einer dichten Kopplung zwischen den beiden Stutzen 18 und 19.

Bei einer anderen Ausführungsform kann einer der Stutzen, z.B. der Sekundärauslassstutzen 19 mit einer Schiebehülse ausgestattet sein, die auf dem Außenmantel des Sekundärauslassstutzens 19 in axialer Richtung verschiebbar ist. Bei zurückgeschobener Hülse ist diese in Richtung Sekundärluftauslass 6 verstellt, um hierdurch den Ein- und Ausbau des Ringfiltereinsatzes 3 zu erleichtern. Bei eingesetztem Ringfiltereinsatz 3 kommt dann ein dem Sekundärauslassstutzen 19 zugewandtes Ende des Anschlussstutzens 18 axial am zugewandten Ende des Sekundärauslassstutzens 19 zur Anlage, wobei dann die Hülse über die gegeneinander stoßenden axialen Enden der Stutzen 18 und 19 verschiebbar ist, um so eine hinreichend dichte Kopplung zwischen den beiden Stutzen 18 und 19 zu gewährleisten.

Im Betrieb der Brennkraftmaschine strömt über den Rohlufteinlass 4 ungefilterte Frischluft in das Filtergehäuse 2 ein, gelangt von dort in das Innere 8 des Ringfiltereinsatzes 3 und tritt durch den Reinluftauslass 5 aus dem Filtergehäuse 2 wieder aus. Diese Frischluftströmung wird dabei durch einen von der Brennkraftmaschine erzeugten und am Reinluftauslass 5 anliegenden Unterdruck generiert. Bei deaktivierter Sekundärluftversorgung ist dementsprechend eine nicht gezeigte, mit dem Sekundärluftauslass 6 verbundene Sekundärluftleitung gesperrt. Falls die Brennkraftmaschine oder deren Abgasreinigungsanlage Sekundärluft benötigt, wird ein entsprechendes, hier nicht gezeigtes Sekundärluftgebläse aktiviert, das am Sekundärluftauslass 6 einen entsprechenden Unterdruck anlegt, um dadurch gereinigte Frischluft aus dem Inneren 8 des Ringfiltereinsatzes 3 anzusaugen. Da der Strömungsweg bis zum Rohlufteinlass 4 beim erfindungsgemäßen Ansaugluftfilter 1 relativ kurz ist, führt dieser zusätzliche Frischluftbedarf zu keinem oder nur zu einem relativ geringen Druckabfall in dem vom Filtergehäuse 2 zur Brennkraftmaschine führenden Ansaugtrakt. Desweiteren beeinträchtigt die Sekundärluftanlage nicht oder nur geringfügig die schalldämpfenden Maßnahmen am Ansaugtrakt zwischen Brennkraftmaschine und Filtergehäuse 2. Dementsprechend kann das erfindungsgemäße Ansaugluftfilter 1 grundsätzlich auch bei einer solchen Sauganlage zur Anwendung kommen, die ursprünglich nicht für eine Sekundärluftversorgung konzipiert worden ist. Insoweit ermöglicht das erfindungsgemäße Ansaugluftfilter 1 einen modularen Aufbau für die Sauganlage.

## Patentansprüche

1. Ansaugluftfilter für eine Brennkraftmaschine, insbesondere bei einem Kraftfahrzeug,
- mit einem Filtergehäuse (2), das einen Rohlufteinlass (4) und einen Reinluftauslass (5) aufweist, und
- mit einem im Filtergehäuse (2) angeordneten, radial von außen nach innen durchströmten Ringfiltereinsatz (3), der an einem axialen Ende eine erste Endscheibe (10) aufweist, die mindestens eine Öffnung (12) aufweist, durch die der Reinluftauslass (5) mit einem Inneren (8) des Ringfiltereinsatzes (3) kommuniziert,
- wobei das Filtergehäuse (2) einen reinseitigen Sekundärluftauslass (6) aufweist, und
- wobei der Ringfiltereinsatz (3) an einem von der ersten Endscheibe (10) abgewandten axialen Ende eine zweite Endscheibe (11) aufweist, die mindestens eine Öffnung (17) aufweist,
**dadurch gekennzeichnet,**
- **dass** durch die Öffnung (17) der zweiten Endscheibe (11) der Sekundärluftauslass (6) mit dem Inneren (8) des Ringfiltereinsatzes (3) kommuniziert,
- **dass** an der zweiten Endscheibe (11) ein Anschlussstutzen (18) ausgebildet ist, durch den der Sekundärluftauslass (6) mit dem Inneren (8) des Ringfiltereinsatzes (3) kommuniziert.

2. Ansaugluftfilter nach Anspruch 1,
**dadurch gekennzeichnet,**
**dass** der Anschlussstutzen (18) und die zweite Endscheibe (11) als separate Bauteile hergestellt sind und dass der Anschlussstutzen (18) in die zweite Endscheibe (11) eingesetzt und/oder fest mit der zweiten Endscheibe (11) verbunden und/oder mit der zweiten Endscheibe (11) verschweißt oder verklebt ist.

3. Ansaugluftfilter nach Anspruch 1,
**dadurch gekennzeichnet,**
**dass** der Anschlussstutzen (18) separat von der zweiten Endscheibe (11) hergestellt ist und dass der Anschlussstutzen (18) bei der Herstellung der zweiten Endscheibe (11) durch Umspritzen oder Umschäumen fest in die zweite Endscheibe (11) eingeformt oder eingeschäumt ist.

4. Ansaugluftfilter nach Anspruch 1,
**dadurch gekennzeichnet,**
**dass** der Anschlussstutzen (18) integral an der zweiten Endscheibe (11) ausgeformt ist.

5. Ansaugluftfilter nach einem der Ansprüche 1 bis 4,
**dadurch gekennzeichnet,**
**dass** am Filtergehäuse (2) ein Sekundärauslassstutzen (19) ausgebildet ist, der komplementär zum Anschlussstutzen (18) ausgebildet ist und durch den der Sekundärluftauslass (6) mit dem Inneren (8) des Ringfiltereinsatzes (3) kommuniziert.

6. Ansaugluftfilter nach Anspruch 5,
**dadurch gekennzeichnet,**
**dass** der Sekundärauslassstutzen (19) integral am Filtergehäuse (2) ausgeformt ist.

7. Ansaugluftfilter nach Anspruch 5 oder 6,
**dadurch gekennzeichnet,**
**dass** Sekundärauslassstutzen (19) und Anschlussstutzen (18) nach Art einer Steckverbindung zusammenwirken, wenn der Ringfiltereinsatz (3) in das Filtergehäuse (2) eingesetzt ist.

8. Ansaugluftfilter nach einem der Ansprüche 1 bis 7,
**dadurch gekennzeichnet,**
**dass** am Filtergehäuse (2) ein Häuptauslassstutzen (13) ausgebildet ist, auf den der Ringfiltereinsatz (3) mit der Öffnung (12) der ersten Endscheibe (10) aufsteckbar ist und durch den der Reinluftauslass (5) mit dem Inneren (8) des Ringfiltereinsatzes (3) kommuniziert.

9. Ringfiltereinsatz für ein Ansaugluftfilter (1) nach einem der Ansprüche 1 bis 8, der an einem axialen Ende eine erste Endscheibe (10) aufweist, die mindestens eine Öffnung (12) aufweist, und der an einem der ersten Endscheibe (10) gegenüberliegenden axialen Ende eine zweite Endscheibe (11) aufweist,
**dadurch gekennzeichnet,**
**dass** die zweite Endscheibe (11) einen Anschlussstutzen (18) aufweist, der einerseits mit einem Inneren (8) des Ringfiltereinsatzes (3) und andererseits bei in ein Filtergehäuse (2) des Ansaugluftfilters (1) eingesetztem Ringfiltereinsatz (3) mit einem Sekundärluftauslass (6) des Filtergehäuses (2) kommuniziert.

10. Ringfiltereinsatz nach Anspruch 9, **gekennzeichnet durch** den kennzeichnenden Teil eines der Ansprüche 2 bis 4.

11. Filtergehäuse des Ansaugluftfilters (1) nach einem der Ansprüche 1 bis 8, das einen Rohlufteinlass (4), einen Reinluftauslass (5) und einen reinseitigen Sekundärluftauslass (6) aufweist,
**dadurch gekennzeichnet,**
**dass** am Filtergehäuse (2) ein Sekundärauslaßstutzen (19) augebildet ist, der mit dem Sekundärluftauslaß (6) kommuniziert, wobei der Sekundärluftauslaß (6) bei in das Filtergehäuse (2) eingesetztem Ringfiltereinsatz (3) durch den Sekundärauslaßstutzen (19) und den Anschlußstutzen (18) mit dem Inneren (8) des Ringfiltereinsatzes (3) kommuniziert.

12. Filtergehäuse nach Anspruch 11, **gekennzeichnet durch** die kennzeichnenden Teil wenigstens eines der Ansprüche 6 bis 8.

## Claims

1. An intake air filter for an internal combustion engine, in particular in a motor vehicle,
- comprising a filter housing (2) which has a crude air inlet (4) and a clean air outlet (5) and
- comprising a ring filter insert (3) which is situated in the filter housing (2) and through which the air flows radially from the outside to the inside, having a first end disk (10) on one axial end, said disk having at least one opening (12) through which the clean air outlet (5) communicates with the interior (8) of the ring filter insert (3),
- whereby the filter housing (2) has a secondary air outlet (6) on the clean side and
- whereby the ring filter insert (3) has a second end disk (11) on one axial end which faces away from the first end disk (10), said second end disk having at least one opening (17),
**characterized in that**
- the secondary air outlet (6) communicates through the opening (17) in the second end disk (11) with the interior (8) of the ring filter insert (3),
- a connection (18) is provided on the second end disk (11) through which the secondary air outlet (6) communicates with the interior (8) of the ring filter insert (3).

2. The intake air filter according to Claim 1,
**characterized in that**
the connection (18) and the second end disk (11) are manufactured as separate parts, and the connection (18) is inserted into the second end disk (11) and/or is fixedly connected to the second end disk (11) and/or is welded or glued to the second end disk (11).

3. The intake air filter according to Claim 1,
**characterized in that**
the connection (18) is manufactured separately from the second end disk (11), and the connection (18) is fixedly molded or embedded in foam in the second end disk (11) by injection molding or foaming around a core in the manufacture of the second end disk (11).

4. The intake air filter according to Claim 1,
**characterized in that**
the intake connection (18) is integrally molded on the second end disk (11).

5. The intake air filter according to one of Claims 1 through 4,
**characterized in that**
a secondary outlet connection (19) is formed on the filter housing (2) and is designed to be complementary to the connection (18), and the secondary air outlet (6) communicates with the interior (8) of the ring filter insert (3) through said connection.

6. The intake air filter according to Claim 5,
**characterized in that**
the secondary outlet connection (19) is integrally molded on the filter housing (2).

7. The intake air filter according to Claim 5 or 6,
**characterized in that**
the secondary outlet connection (19) and the connection (18) cooperate in the manner of a plug connection when the ring filter insert (3) is inserted into the filter housing (2).

8. The intake air filter according to one of Claims 1 through 7,
**characterized in that**
a main outlet connection (13) is formed on the filter housing (2), with the ring filter insert (3) with the opening (12) in the first end disk (10) being attachable to this outlet connection, and the clean air outlet (5) communicates with the interior (8) of the ring filter insert (3) through this connection.

9. A ring filter insert for the intake air filter (1) according to one of Claims 1 through 8, having on one axial end a first end disk (10) which has at least one opening (12) and having a second end disk (11) on the axial end opposite the first end disk (10),
**characterized in that**
the second end disk (11) has a connection (18) which communicates with the interior (8) of the ring filter insert (3) on the one hand and on the other hand also communicates with a secondary air outlet (6) of the filter housing (2) in the case of a ring filter insert (3) inserted into a filter housing (2) of the intake air filter (1).

10. The ring filter insert according to Claim 9,
**characterized by**
the characterizing part of one of Claims 2 through 4.

11. A filter housing of the intake air filter (1) according to one of Claims 1 through 8, having a crude air inlet (4), a clean air outlet (5) and a secondary air outlet (6) on the clean side,
**characterized in that**
a secondary outlet connection (19) is formed on the filter housing (2), communicating with the secondary air outlet (6) and being designed to be complementary to the connection (18), whereby the secondary air outlet (6) communicates through the secondary outlet connection (19) with the interior (8) of the ring filter insert (3) when the ring filter insert (3) is inserted into the filter housing (2).

12. The filter housing according to Claim 11,
**characterized by**
the characterizing features of at least one of Claims 6 through 8.

## Revendications

1. Filtre à air d'admission pour un moteur à combustion interne, en particulier sur un véhicule à moteur,
- comportant un carter de filtre (2) qui présente une entrée d'air brut (4) et une sortie d'air pur (5), et
- comportant une cartouche filtrante annulaire (3) disposée dans le carter de filtre (2), traversée radialement de l'extérieur vers l'intérieur, qui présente à une extrémité axiale un premier disque d'extrémité (10) qui présente au moins une ouverture (12) par laquelle la sortie d'air pur (5) communique avec un intérieur (8) de la cartouche filtrante annulaire (3),
- dans lequel le carter de filtre (2) présente une sortie d'air secondaire (6) du côté pur, et
- dans lequel la cartouche filtrante annulaire (3) présente, à une extrémité axiale détournée du premier disque d'extrémité (10), un second disque d'extrémité (11) qui présente au moins une ouverture (17),
**caractérisé en ce**
- **que** la sortie d'air secondaire (6) communique avec l'intérieur (8) de la cartouche filtrante annulaire (3) par l'ouverture (17) du second disque d'extrémité (11),
- **que** sur le second disque d'extrémité (11) est réalisée une tubulure de raccordement (18) par laquelle la sortie d'air secondaire (6) communique avec l'intérieur (8) de la cartouche filtrante annulaire (3).

2. Filtre à air d'admission selon la revendication 1,
**caractérisé en ce**
**que** la tubulure de raccordement (18) et le second disque d'extrémité (11) sont fabriqués en tant que pièces séparées et que la tubulure de raccordement (18) est insérée dans le second disque d'extrémité (11) et/ou reliée fermement au second disque d'extrémité (11) et/ou soudée ou collée au second disque d'extrémité (11).

3. Filtre à air d'admission selon la revendication 1,
**caractérisé en ce**
**que** la tubulure de raccordement (18) est fabriquée séparément du second disque d'extrémité (11) et que la tubulure de raccordement (18) est fermement enrobée dans un moulage ou une mousse dans le second disque d'extrémité (11), lors de la fabrication du second disque d'extrémité (11) par injection ou moussage périphérique.

4. Filtre à air d'admission selon la revendication 1,
**caractérisé en ce**
**que** la tubulure de raccordement (18) est formée d'une seule pièce sur le second disque d'extrémité (11).

5. Filtre à air d'admission selon l'une des revendications 1 à 4,
**caractérisé en ce**
**que** sur le carter de filtre (2) est réalisée une tubulure de sortie secondaire (19) qui est réalisée de manière complémentaire de la tubulure de raccordement (18) et par laquelle la sortie d'air secondaire (6) communique avec l'intérieur (8) de la cartouche filtrante annulaire (3).

6. Filtre à air d'admission selon la revendication 5,
**caractérisé en ce**
**que** la tubulure de sortie secondaire (19) est formée d'une seule pièce sur le carter de filtre (2).

7. Filtre à air d'admission selon la revendication 5 ou 6,
**caractérisé en ce**
**que** la tubulure de sortie secondaire (19) et la tubulure de raccordement (18) coopèrent à la manière d'une liaison enfichée lorsque la cartouche filtrante annulaire (3) est insérée dans le carter de filtre (2).

8. Filtre à air d'admission selon l'une des revendications 1 à 7,
**caractérisé en ce**
**que** sur le carter de filtre (2) est réalisée une tubulure de sortie principale (13) sur laquelle la cartouche filtrante annulaire (3) peut être enfichée avec l'ouverture (12) du premier disque d'extrémité (10) et par laquelle la sortie d'air pur (5) communique avec l'intérieur (8) de la cartouche filtrante annulaire (3).

9. Cartouche filtrante annulaire pour un filtre à air d'admission (1) selon l'une des revendications 1 à 8, qui présente à une extrémité axiale un premier disque d'extrémité (10) qui présente au moins une ouverture (12) et qui, à une extrémité en vis-à-vis du premier disque d'extrémité (10), présente un second disque d'extrémité (11),
**caractérisé en ce**
**que** le second disque d'extrémité (11) présente une tubulure de raccordement (18) qui communique d'une part avec un intérieur (8) de la cartouche filtrante annulaire (3) et d'autre part avec une sortie d'air secondaire (6) du carter de filtre (2) lorsqu'une cartouche filtrante annulaire (3) est insérée dans un carter de filtre (2) du filtre à air d'admission (1).

10. Filtre à air d'admission selon la revendication 9, **caractérisé par** la partie caractérisante de l'une des revendications 2 à 4.

11. Carter de filtre du filtre à air d'admission (1) selon l'une des revendication 1 à 8, qui présente une entrée d'air brut (4), une entrée d'air pur (5) et une sortie d'air secondaire (6) du côté air pur,
**caractérisé en ce**
**que** sur le carter de filtre (2) est réalisée une tubulure de sortie secondaire (19) qui communique avec la sortie d'air secondaire (6), la sortie d'air secondaire (6) communiquant avec l'intérieur (8) de la cartouche filtrante annulaire (3) par la tubulure de sortie secondaire (19) et la tubulure de raccordement (18) lorsque la cartouche filtrante annulaire (3) est insérée dans le carter de filtre (2).

12. Carter de filtre selon la revendication 11, **caractérisé par** la partie caractérisante d'au moins l'une des revendications 6 à 8.
